# EUROPÄISCHE PATENTSCHRIFT

(11) **EP 3 757 336 B1**
(45) Veröffentlichungstag und Bekanntmachung des Hinweises auf die Patenterteilung: **25.09.2024**
(21) Anmeldenummer: 20181352.4
(22) Anmeldetag: 22.06.2020
(51) Int. Cl.: E05F 15/627

(54) **VERFAHREN ZUR BESTIMMUNG DER SPANNUNG EINES ANTRIEBSRIEMENS**
METHOD FOR DETERMINING THE TENSION OF A DRIVE BELT
PROCÉDÉ DE DÉTERMINATION DE LA TENSION D'UNE COURROIE D'ENTRAÎNEMENT

(30) Priorität: 24.06.2019 DE 102019116913
(43) Veröffentlichungstag der Anmeldung: 30.12.2020
(73) Patentinhaber: Bode - Die Tür GmbH, 34123 Kassel (DE)
(72) Erfinder: Andler, Daniel, 34266 Niestetal (DE)
(74) Vertreter: Patentanwälte Bauer Vorberg Kayser

(56) Entgegenhaltungen:
- DE-A1- 10 338 492
- DE-A1- 102007 008 858
- DE-A1- 102017 124 599

## Beschreibung

Die vorliegende Erfindung betrifft ein Verfahren zur Bestimmung der Spannung eines Antriebsriemens. Weiterhin betrifft die Erfindung ein Türsystem, nämlich ein Schiebetür- oder Schwenkschiebetürsystem.

Elektromechanische Systeme, wie z.B. motorisch angetriebene Türsysteme, werden häufig in einem andauernden und kontinuierlichen Betrieb eingesetzt und sind damit ständigen Belastungen ausgesetzt. Die vorliegende Erfindung nimmt insbesondere auf in derartigen Systemen verwendete Antriebsriemen Bezug, die in der Regel dazu vorgesehen sind, ein von einer Antriebseinheit erzeugtes Drehmoment auf eine Last, im Falle eines Türsystems beispielsweise einen Türflügel, zu übertragen. Im Wege der Drehmomentübertragung kann die Last in Bewegung versetzt werden, im Falle eines Türflügels beispielsweise in eine Öffnungs- oder Schließbewegung. Aufgrund des Dauereinsatzes elektromechanischer Systeme (beispielsweise bei Türsystemen in Fahrzeugen zur öffentlichen Personenbeförderung) sind auch die in den dortigen Systemen eingesetzten Antriebsriemen einer Dauerbelastung ausgesetzt.

Beschädigungen von Antriebsriemen können zu Betriebsbeeinträchtigen des zugehörigen elektromechanischen Systems oder gar zu dessen Ausfall führen, womit unweigerlich auch ein erhöhtes Sicherheitsrisiko einhergeht. Entsprechend ist es von großem Interesse, ein effizientes Zustandsüberwachungsverfahren für Antriebsriemen zu entwickeln, welches eine optimierte Wartung und eine Vorhersage des Spannungszustandes erlaubt. Ein Maß dafür kann die Spannung des Antriebsriemens sein.

Wie allgemein bekannt, ist die Verwendung von Antriebsriemen nicht auf Türsysteme beschränkt. Denn Antriebsriemen kommen in vielerlei technischen Systemen zum Einsatz. Ausdrücklich sei an dieser Stelle betont, dass die Erfindung nicht auf Türsysteme beschränkt ist und auch elektromechanische Systeme betrifft, die in anderen technischen Bereichen eingesetzt werden. So werden Antriebsriemen in großem Umfang in den verschiedensten industriellen Applikationen eingesetzt, wie z.B. wie Ventilatoren, Pumpen, Kompressoren, etc.

Während des Betriebs (insbesondere Dauerbetriebs) unterliegen die Antriebsriemen einer zunehmenden mechanischen Ermüdung. Mit der mechanischen Belastung des Antriebsriemens einhergehend, kann sich der sogenannte Riemenschlupf erhöhen (Gleitschlupf oder Dehnschlupf), gleiches gilt in Bezug auf kontinuierlich zunehmende Spannungsverluste. Letztlich können die mechanischen Belastungen gar zu einer Verkürzung der Lebensdauer des Antriebsriemens und - im schlimmsten Fall - zu einem Riss des Antriebsriemens führen.

Bezogen auf die vorangehend bereits angesprochene Verwendung von Antriebsriemen in Türsystemen, ist festzustellen, dass ein großer Anteil der heute verwendeten Türsysteme in zur öffentlichen Personenbeförderung eingesetzten Verkehrsmitteln (gemeint sind Radfahrzeuge, z.B. Busse, gleichermaßen wie Schienenfahrzeuge, z.B. Straßenbahnen, U-Bahnen, Züge etc.) auf der Verwendung von Antriebsriemen beruht. Bei Türsystemen besteht die Hauptfunktion des Antriebsriemens darin, eine Bewegung eines Türflügels zu vermitteln, nämlich im Wege der Übertragung eines von einer Antriebseinheit (bzw. einem Motor) erzeugten Drehmoments auf den Türflügel. Durch Einstellung der Amplitude und Richtung des wirkenden Drehmoments können Türflügel in ihrer Bewegung beschleunigt, abgebremst und in ihrer Bewegungsrichtung umgekehrt werden.

Gleiches gilt prinzipiell auch für den Einsatz von Antriebsriemen bei Eintrittssystemen wie Schiebe- oder Klapptrittsystemen. In diesem Fall kann über einen Antriebsriemen eine horizontale Bewegung eines Schiebetritts beispielsweise in Richtung einer Fahrgastplattform (und umgekehrt) vermittelt werden. Bei Klapptrittsystemen betrifft die vermittelte Bewegung das Ein- und Ausklappen des Klapptritts. In den genannten Fällen wird der Antriebsriemen in der Regel über Umlenkrollen (bzw. Riemenscheiben), beispielsweise zwei Umlenkrollen, geführt und ist über geeignete und aus dem Stand der Technik wohlbekannte mechanische Verbindungselemente sowohl an die Antriebseinheit bzw. eine zugehörige Ausgangswelle und an den als Last anzusehenden Türflügel (bzw. den Schiebetritt) angebunden. Jener von der antriebsseitigen Riemenscheibe gezogene (und unter Zugspannung) stehende Teil des Antriebsriemens wird fachüblich auch als Lasttrum bezeichnet, der gegenüberliegende Teil als Leertrum.

Je nach Art, Material und Größe, kann die für einen zuverlässigen Betrieb eines elektromechanischen Systems benötigte Zugspannung variieren. Wie bereits vorangehend beschrieben, verändert sich die Zugspannung hauptsächlich mit voranschreitender Lebensdauer des Antriebsriemens im Zuge der im Betrieb auf den Antriebsriemen einwirkenden mechanischen Belastungen. Weiterhin wird die Zugspannung durch die Temperatur und natürliche, materialspezifische Alterungsprozesse beeinflusst. Entsprechend weisen Antriebsriemen einen Toleranzbereich für die Zugspannung auf, bei welchem ein zuverlässiger Betrieb bzw. eine zuverlässige Verwendung des Antriebsriemens gewährleistet ist. Sofern im Rahmen der vorliegenden Erfindung von einer "Spannung" die Rede ist, ist darunter in erster Linie eine Zugspannung bzw. Riemenspannung des Antriebsriemens zu verstehen.

Um eine Fehlfunktion des Antriebsriemens während des Betriebs zu vermeiden, gibt es routinemäßige Wartungsverfahren, die die Kontrolle und Einstellung der Riemenspannung beinhalten. Ein weiteres Konzept, welches die routinemäßige Wartung ergänzen oder ersetzen kann, ist die zustandsorientierte Instandhaltung. Damit können Anomalien oder Fehlfunktionen des Antriebsriemens erkannt werden, bevor es tatsächlich zu einem Schaden oder einem Ausfall des Antriebsriemens kommt.

Aus dem Stand der Technik sind zwei gängige Verfahren bekannt, um die Zugspannung eines Antriebsriemens zu messen. Die gebräuchlichste Methode ist die Messung der Zugspannung über die Schwingungsfrequenz. Je höher die Frequenz, desto höher die Zugspannung. Diese Methode ist jedoch nicht für Echtzeitmessungen während des aktiven Betriebs (also der Verwendung des Antriebsriemens in einem laufenden System, beispielsweise einem Türsystem) geeignet, da sie eine spezifische Stimulation des Antriebsriemens erfordert, um die für die Messung benötigten Vibrationen auszulösen. Darüber hinaus erfordert ein solches Messverfahren die Verwendung eines geeigneten Sensors, der in der Nähe des Antriebsriemens platziert werden muss. Zusätzlich muss gewährleistet sein, dass sich der Antriebsriemen während der Messung ohne mechanische Belastung in einer statischen Position befindet. Dieses Verfahren hat eine hohe Genauigkeit und wird standardmäßig in einem Frequenzbereich von 10 bis 300 Hz verwendet. Nachteilig ist dabei, dass zusätzliche Hardware (Sensoren, Vorrichtung zur Schwindungsübertragung) benötigt werden, was mit einem zusätzlichen Kostenaufwand verbunden ist.

Die andere gängige Methode ist die Messung der Riemenlängenzunahme durch Spannen des Antriebsriemens. Diese Methode ist weniger komplex und kostenintensiv als die erste Methode, nachteilig ist jedoch die geringere Genauigkeit. Ferner kann diese Methode nicht verwendet werden, nachdem der Riemen bereits gespannt wurde. Ein solches Verfahren wird in der Regel bei Spannweiten größer als 1 m eingesetzt.

Eine weitere Möglichkeit, die Spannung eines Antriebsriemens zu bestimmen, besteht darin, einen Dehnungsmessstreifen unmittelbar innerhalb des Antriebsriemens anzuordnen (oder in der zugehörigen mechanischen Konstruktion, die mit der gleichen Kraft wie der Antriebsriemen gespannt wird). Bei Implementierung eines Dehnungsmessstreifens unmittelbar in den Antriebsriemen, muss der Riemen geöffnet (z.B. aufgeschnitten) und mit dem Dehnungsmessstreifen wieder zusammengesetzt bzw. geschlossen werden. Ein solches Vorgehen ist relativ aufwändig und erfordert manuelle Arbeitsschritte. Die andere Möglichkeit besteht darin, den Dehnungsmessstreifen z.B. in den Mechanismus einer Spannvorrichtung des Antriebsriemens zu implementieren, z.B. eine Schraube. Dieses Verfahren ermöglicht eine quasi-direkte Messung der Riemenspannung.

Mit der Verwendung von Dehnungsmessstreifen gehen jedoch mehrere Nachteile einher. Einerseits ist die Messgenauigkeit von Dehnungsmesstreifen stark temperaturabhängig, andererseits sind sie relativ empfindlich gegenüber mechanischen Belastungen. Bei Implementierung bzw. Einbettung solcher Dehnungsmessstreifen in einen Antriebsriemen wird letzterer durch die Einbettung dieses Sensorelements physikalisch modifiziert, d.h. die Einbettung kann die physikalischen Eigenschaften (beispielsweise die Zugspannung) beeinflussen und somit zu Messungenauigkeiten und sogar Leistungseinbußen des Antriebsriemens führen. Schließlich erfordert eine solche (auf Dehnungsmessstreifen basierende) Messung eine gesonderte elektronische Einrichtung, um die von den Dehnungsmessstreifen kommenden Signale auszuwerten, beispielsweise umfassend eine Wheatstone-Brücke sowie einen Verstärker. Ein solches Verfahren kann nur zu Testzwecken eingesetzt werden.

Aus der DE 10 2017 124 599 A1 ist ein Verfahren zum Erkennen eines Verschleißzustandes einer Komponente eines Türantriebssystems eines Schienenfahrzeugs bekannt, wobei das Verfahren einen Schritt des Einlesens einer Abfolge von ersten Motorparametern und zweiten Motorparametern aufweist, wobei die ersten Motorparameter eine unterschiedliche physikalische Größe eines Motors des Türantriebssystems repräsentieren als die zweiten Motorparameter. Das Verfahrens weist einen Schritt des Prüfens auf, ob ein die Abfolge des ersten Motorparameters repräsentierender Wert ein vorbestimmtes Kriterium erfüllt, um den Verschleißzustand der Komponente des Türantriebssystems zu erkennen.

Entsprechend ist es die Aufgabe der vorliegenden Erfindung, ein Verfahren zur Bestimmung der Spannung eines Antriebsriemens bereitzustellen, welches eine automatisierte Überwachung des Spannungszustandes während der aktiven Nutzung des Antriebsriemens in einem elektromechanischen System erlaubt, im Vergleich zu den aus dem Stand der Technik bekannten Verfahren kostengünstig ist, und die physikalischen Eigenschaften des Antriebsriemens nicht beeinträchtigt.

Weiterhin ist es die Aufgabe der vorliegenden Erfindung ein Türsystem bereitzustellen, welches dazu eingerichtet ist das erfindungsgemäße Verfahren auszuführen und die vorgenannte Aufgabe zu lösen.

Zur Lösung dieser Aufgaben wird ein Verfahren mit den Merkmalen des Patenanspruchs 1 und ein Türsystem mit den Merkmalen des Patentanspruchs 9 vorgeschlagen.

Die vorliegende Erfindung bietet die technische Lösung, um ein zustandsorientiertes Instandhaltungsverfahren zur Überwachung der Spannung bzw. Zugspannung eines Antriebsriemens bereitzustellen. Der Einsatz spezieller Sensorik ist im Rahmen der Erfindung nicht erforderlich.

Wie bereits erwähnt, betrifft die vorliegende Erfindung ein Verfahren zur Bestimmung der Spannung eines Antriebsriemens, wobei der Antriebsriemen zur Übertragung eines von einer Antriebseinheit erzeugten Drehmoments auf eine Last, beispielsweise einen Türflügel eines Türsystems, vorgesehen ist. Dabei umfasst das erfindungsgemäße Verfahren zumindest die nachfolgend beschriebenen Schritte:
In einem Verfahrensschritt a. wird die Last (im Beispiel eines Türsystems: ein Türflügel eines Schiebetürsystems, Schwenkschiebetürsystems oder einer Schwenktüre; im Beispiel eines Trittsystems: ein Schiebetritt oder ein Klapptritt) von einem bewegten Zustand in einen Ruhezustand bewegt. Während der Ausführung des Verfahrensschritts a. wird die Motorspannung in einem Verfahrensschritt b. erfasst. Dazu kann eine geeignete Messeinheit im Bereich des Motors vorgesehen sein, beispielsweise ein Spannungsmesser. Auch anderweitige Wege zur Erfassung der Motorspannung können im Rahmen des erfindungsgemäßen Verfahrens Verwendung finden, solange die Motorspannung kurz vor, während und nach dem Erreichen des Ruhezustandes der Last erfasst wird. Im Rahmen des Verfahrensschritts b. wird aus der erfassten Motorspannung bzw. den Motorspannungsdaten eine zeitaufgelöste Motorspannungskurve erstellt bzw. bereitgestellt. In der Motorspannungskurve ist die Motorspannung auf der Ordinate und die Zeit auf der Abszisse eines zweidimensionalen Koordinatensystems dargestellt. Gleichermaßen können die Daten aber auch in Tabellenform bereitgestellt werden.

Die zeitaufgelöste Motorspannungskurve bezieht sich auf die Motorspannung eines der Antriebseinheit zugeordneten Motors. Unerheblich ist dabei die genaue Konstruktion, Art, Größe etc. des Motors. Die Motorspannungskurve kann von einer Rechen- und Steuereinheit ermittelt werden, die entweder in die Antriebseinheit oder ein umgebendes Bauteil integriert und mit der Messeinheit zur Erfassung der Motorspannung signaltechnisch verbunden ist (kabellos oder kabelgebunden). Auch kann die Motorspannungskurve von einer externen Rechen- und Steuereinheit bereitgestellt werden, die signaltechnisch (beispielsweise über eine kabellose Signalverbindung) mit der Antriebseinheit oder der Messeinheit verbunden ist. In diesem Fall kann ergänzend vorgesehen sein, dass im Bereich der Antriebseinheit und/oder der Messeinheit Mikrocontroller vorgesehen sind, die über geeignete Schnittstellen mit der externen Rechen- und Steuereinheit in einer Signalverbindung stehen.

Erfindungsgemäß kann vorgesehen sein, die Motorspannung kontinuierlich, d.h. andauernd, aufzuzeichnen bzw. zu erfassen, oder aber nur in einem definierten Zeitintervall kurz vor, während und nach Erreichen des Ruhezustandes der Last. Weiterhin kann vorgesehen sein, die erfassten Daten temporär auf der Recheneinheit bzw. einem der Recheneinheit zugeordneten Speichereinheit (zwischen) zu speichern.

In einem weiteren Verfahrensschritt c. wird aus der erfassten Motorspannung bzw. der Motorspannungskurve der Motorstrom ermittelt und eine zeitaufgelöste Motorstromkurve bereitgestellt. Die Motorstromkurve hat die gleiche zeitliche Dimension wie die Motorspannungskurve. Der Motorstrom wird vorzugsweise rechnerisch ermittelt, gegebenenfalls unter Zuhilfenahme weiterer Kennparameter.

In einem weiteren Verfahrensschritt d. wird die zeitaufgelöste Motorstromkurve ausgewertet und die Spannung des Antriebsriemens anhand von ausgewählten Kurvenmerkmalen der Motorstromkurve ermittelt. Die Auswertung kann ebenfalls von der vorgenannten Rechen- und Steuereinheit vorgenommen werden, die in die Antriebseinheit integriert oder extern dazu angeordnet sein kann. Als externe Rechen- und Steuereinheit kann beispielsweise auch ein Server eines Rechenzentrums zu verstehen sein. Die Daten werden in diesem Falle vorzugsweise im Wege einer mobilen und kabellosen Datenübertragung an den Server übermittelt.

Der vorliegenden Erfindung ist zugrunde gelegt, dass die Motorspannung in elektromechanischen Systemen zur Drehzahl des Motors (als Teil der Antriebseinheit) proportional ist, während der Motorstrom proportional zum von der Antriebseinheit erzeugten Drehmoment ist. Wie schon erwähnt, lässt sich über den Antriebsriemen ein von der Antriebseinheit bzw. dem Motor erzeugtes Drehmoment (also letztlich Energie) auf die ebenfalls mit dem Antriebsriemen wirkverbundene Last übertragen. Da die Last eine nicht zu vernachlässigende Eigenmasse aufweist, muss eine ausreichende Energie bereitgestellt werden, um die Last vom Ruhezustand in einen bewegten Zustand zu befördern und auf eine bestimmte Geschwindigkeit zu beschleunigen. Das erfindungsgemäße Verfahren macht sich zur Bestimmung der Spannung des Antriebsriemens, jedoch insbesondere den Wechsel von einem bewegten in einen Ruhezustand zu Nutze.

Im Folgenden ist die Funktionsweise des erfindungsgemäßen Verfahrens beispielhaft anhand eines Türsystems erläutert. Dabei kann es sich beispielweise um ein Schiebetürsystem mit zumindest einem Türflügel handeln (einflügelige Schiebetüre), wobei der Türflügel als Last im Sinne der Terminologie der hiesigen Erfindung anzusehen ist. Gleichermaßen kann es sich um ein aus zwei Türflügeln zusammengesetztes zweiflügeliges Türsystem handeln. In einem solchen Fall können beide Türflügel jeweils eine Last im Sinne der Erfindung darstellen. Das Verfahren kann in diesem Fall redundant ausgebildet sein, denn sofern beide Türflügel über einen separaten Antrieb bzw. Antriebsriemen bewegt werden, ist es im Sinne der Erfindung erstrebenswert, die Spannung beider Antriebsriemen zu überwachen.

Auch kann das erfindungsgemäße Verfahren bei Schwenkschiebetürsystemen (sei es einflügelig oder zweiflügelig) zum Einsatz kommen. Ausdrücklich sei zudem betont, dass das erfindungsgemäße Verfahren nicht auf Türsysteme beschränkt ist, und ohne Weiteres auch bei Trittsystemen zum Einsatz kommen kann. Bei einem solchen Trittsystem (z.B. Schiebetrittsystem oder Klapptrittsystem) kann ein aus- und einfahrbarer Schiebetritt (oder ein aus- und einklappbarer Klapptritt) als Last im Sinne der Erfindung angesehen werden, auf welchen ebenfalls unter Einsatz eines Antriebsriemens eine zur Bewegung benötigte Kraft übertragen wird.

Bei einer Bewegung der Last (z.B. des Türflügels) vom Ruhezustand in den bewegten Zustand muss die Antriebseinheit (welche die Last auf ihre Referenzgeschwindigkeit oder Sollgeschwindigkeit beschleunigt hat) nur noch eine ausreichende Energie liefern, um die Last in Bewegung zu halten. Das von der Antriebseinheit bereitgestellte und auf den Antriebsriemen wirkende Drehmoment wird dahingehend angepasst, dass ein Ausgleich der in der Antriebseinheit (Motor, Getriebe) auftretenden Reibungskräfte ermöglicht wird. Nach der Beschleunigung der Last (samt ihrer Eigenmasse) wird diese zur Quelle der kinematischen Energie.

Da der Antriebsriemen eine elastisch-mechanische Verbindung zwischen Last und Antriebseinheit (bzw. Motor) bereitstellt, lässt sich die Spannung des Antriebsriemens erfindungsgemäß anhand von Motorkennwerten ermitteln.

Das erfindungsgemäße Verfahren lässt sich unabhängig von einem bestimmten Motortyp bzw. einer elektronischen Einheit zum Antreiben des Motors verwirklichen. In den von der Anmelderin entwickelten Boarding-Systemen werden beispielsweise häufig bürstenbehaftete Gleichstrommotoren eingesetzt, wobei die elektronische Einheit zum Antreiben des Motors normalerweise vier-quadranten DC-DC-Wandler umfasst, die im Fachjargon auch als H-Brücken-Wandler oder Motor-Brücke bezeichnet werden. Außerdem können jene dem DC-DC Wandler zugehörigen Schalter beliebiger Natur sein (ihre Eignung vorausgesetzt), aber dieses Dokument wird die Schalter als Mosfets bezeichnen.

Bei den genannten Boarding-Systemen (beispielsweise einem Türsystem) kann der zugehörige Türflügel zwei Endpositionen einnehmen, nämlich eine geschlossene und eine geöffnete Endposition. In der geschlossenen Endposition ist ein Eintritt durch die Türe nicht möglich, in der geöffneten Endposition jedoch schon.

Beide Endpositionen zeichnen sich dadurch aus, dass die resultierende Motorspannung in der Antriebseinheit Null ist, d. h. der Motor wird durch die dem DC-DC Wandler zugehörigen Halbleiter elektrisch unterbrochen. Auch der einem Trittsystem zugeordnete Schiebetritt oder Klapptritt kann zwei solche Endpositionen (bzw. Ruhestellungen) einnehmen, nämlich eine ausgefahrene oder eine eingefahrene Stellung.

Wie bereits erwähnt erzeugt die Last bei ihrer Bewegung (aufgrund der sich dabei bewegenden Eigenmasse) eine kinetische Energie. Unter Vernachlässigung der Antriebseinheit, kann diese kinetische Energie auch als remanente Energie betrachtet werden, welche sich u. a. im Motorstrom wiederspiegelt. Bezogen auf elektrische Kennwerte, kann der Motorstrom bei der Bewegung der Last sein Vorzeichen ändern. Grundsätzlich kann der Strom vom Antrieb zur Quelle und zurück zum Antrieb fließen. Nach dem Ende des Bewegungsvorgangs, also bei Erreichen der Last in einer Ruheposition, kann der Strom aufgrund der elastischen Charakteristik des Systems abklingen, bis die restliche Energie abgebaut ist.

Kurz vor Erreichen des Ruhezustandes der Last (also beispielsweise einer Öffnungsstellung oder einer Schließstellung eines Türflügels) wird eine "Mindestspannung" benötigt, um den Türflügel auch kurz vor dem Erreichen des Ruhezustandes mit einer bestimmten (langsamen) Geschwindigkeit und einem bestimmten Drehmoment anzutreiben. Die dazu benötigte Geschwindigkeit bzw. das Drehmoment werden von der Rechen- und Steuereinheit vorgegeben.

Nach dem Erreichen des Ruhezustands, wird der zur Bereitstellung des Drehmoments vorgesehene Stromkreis der Antriebseinheit unterbrochen. Selbst wenn die "Mindestspannung" im Vergleich zur Nominalspannung der Antriebseinheit klein ist, ändert sie sich sehr schnell und führt zu einem Stoppen des Antriebs.

Im Rahmen der Entwicklung der vorliegenden Erfindung wurde festgestellt, dass nach Erreichen der Endposition eine gewisse intrinsische Energie im System (insbesondere im Antriebsriemen) verbleibt. Dies wirkt sich auch auf elektrische Kennwerte der Antriebseinheit bzw. einem zugehörigen Motor aus, beispielsweise in Form charakteristischer Kurvenmerkmale der Motorspannungskurve oder Motorstromkurve. Aus diesen Merkmalen lässt sich die Zugspannung des Antriebsriemens ableiten.

Nach dem Abschalten des Motors, wird die genannte intrinsische Energie vom Antriebsriemen an die Antriebseinheit bzw. den Motor weitergeleitet, nämlichen solange bis die Energie auf ein stationäres Niveau abgefallen ist. Die remanente Energie des Antriebs hängt daher (zumindest zeitweise) unter anderem von der Zugspannung des Antriebsriemens ab. Grundsätzlich wirkt sich die Zugspannung des Antriebsriemens unmittelbar auf die Elastizität des Systems und damit auf die gesamte Dämpfungscharakteristik aus. Aufgrund dieses Zusammenhangs lässt sich die Zugspannung des Antriebsriemens indirekt messen. Aus der Zugspannung lässt sich wie vorangehend erläutert ein Verschleißzustand des Antriebsriemens herleiten, beispielsweise durch Vergleich mit einem vorgegebenen Ausgangswert, Tabellen- oder Erfahrungswerten der Zugspannung. Aus den Kurvenmerkmalen der Motorstromkurve bzw. der Motorspannungskurve in einem zeitlich dem Erreichen der Ruheposition der Last nachgelagerten Zeitraum, lassen sich also Aussagen zur Spannung des Antriebsriemens treffen.

Der elektrische Strom ist eine physikalische Größe mit hoher Variabilität. Die Amplitude und die Form der Motorstromkurve hängen von vielerlei unterschiedlicher Faktoren ab. Da die zeitaufgelöste Motorstromkurve bzw. die darin enthaltenen Kurvenmerkmale zur Bestimmung der Spannung des Antriebsriemens bevorzugt algorithmisch ausgewertet werden, müssen eine Reihe von Randbedingungen bei der Auswertung berücksichtigt werden. Bei Verwendung des Verfahrens in einem Türsystem sind die zu berücksichtigenden Hauptfaktoren die Temperatur und die Neigung des Türsystems. Gleiches kann auch für Trittsysteme gelten. Diese externen Faktoren verändern das Verhältnis zwischen Strom und der Zugspannung des Antriebsriemens. Um dies zu kompensieren, kann ein auf künstlicher Intelligenz basierender Auswertealgorithmus verwendet werden, der eine Verarbeitung multivariabler Datensätzen erlaubt.

Trotz der Tatsache, dass die einem Türsystem zugehörigen Türflügel bei der Hinderniserkennung sehr schnell und plötzlich umkehren, werden im Rahmen der vorliegenden Erfindung zur Bestimmung der Spannung des Antriebsriemens nur die "normalen" Endlagenfälle berücksichtigt, im Speziellen jene dem geöffneten Zustand des Türsystems zugehörige Endposition der/des Türflügel(s), und jener dem geschlossenen Zustand des Türsystems zugehörige Endposition der/des Türflügel(s). Bei der letztgenannten Schließendlage der/des Türflügel(s) sind weitere Effekte wie der Einfluss einer Türverriegelung bzw. eines Schlosses zu berücksichtigen.

Die Unteransprüche betreffen vorteilhafte Ausgestaltungen und Weiterbildungen der vorliegenden Erfindung. Die in den Unteransprüchen angegebenen Merkmale können in beliebiger Kombination zur Weiterbildung des erfindungsgemäßen Verfahrens sowie des erfindungsgemäßen Systems verwendet werden, soweit dies technisch möglich ist. Dies gilt auch dann, wenn derartige Kombinationen nicht ausdrücklich durch entsprechende Rückbezüge in den Ansprüchen verdeutlicht sind. Insbesondere gilt dies auch über die Kategorie-Grenzen der Patentansprüche hinweg.

Nach einer ersten Ausgestaltung der Erfindung kann es sich bei der Last um einen Türflügel eines ein- oder zweiflügeligen Schiebetür- oder Schwenkschiebetürsystems handeln. Gleichermaßen kann es sich bei der Last auch um einen Türflügel eines Schwenktürsystems handeln. Ferner kann auch ein Schiebetritt oder Klapptritt eines Schiebetrittsystems respektive Klapptrittsystems als Last im Sinne der vorliegenden Erfindung zu betrachten sein.

Nach einer weiteren Ausgestaltung der Erfindung betrifft der bewegte Zustand eine Öffnungs- oder Schließbewegung des Türflügels. Der Ruhezustand kann in diesem Fall insbesondere einen geöffneten Zustand des Türflügels betreffen. Alternativ kann der Ruhezustand einen geschlossenen Zustand des Türflügels betreffen.

Gleichermaßen kann der bewegte Zustand aber ein Aus- oder Einfahren eines Schiebetritts betreffen. Ebenso kann der bewegte Zustand ein Aus- oder Einklappen eines Klapptritts betreffen. Der Ruhezustand betrifft in diesen Fällen entweder einen eingefahrenen bzw. eingeklappten Zustand des Schiebetritts bzw. Klapptritts oder alternativ einen ausgefahrenen bzw. ausgeklappten Zustand des Schiebetritts bzw. Klapptritts.

Nach einer vorteilhaften Ausgestaltung der Erfindung erfolgt die Auswertung im Rahmen des Verfahrensschritts d. im Wege einer algorithmischen Auswertung, wobei der Auswertung ausgewählte Kurvenmerkmale der Motorstromkurve zugrunde gelegt sind, welche die Motorstromkurve nach dem Erreichen der Last im Ruhezustand kennzeichnen. Entsprechend können der Auswertung jene Kurvenmerkmale der Motorstromkurve zugrunde gelegt werden, welche die Motorstromkurve in einem Zustand kennzeichnen, bei dem der Stromkreis des Motors unterbrochen ist. Insbesondere handelt es sich dabei um jene Kurvenmerkmale, die aus in dem Antriebsriemen gespeicherter intrinsischer Energie hervorgehen. Weiterhin kann erforderlich sein, den Einfluss der Temperatur bei der algorithmischen Auswertung zu berücksichtigen. Mit Temperatur kann eine Außentemperatur, sowie eine Motortemperatur gemeint sein. Um Wiederholungen zu vermeiden sei diesbezüglich auf die vorangehende Beschreibung verwiesen.

Nach einer vorteilhaften Ausgestaltung der vorliegenden Erfindung können die Kurvenmerkmale der Motorstromkurve ausgewählt sein aus der Kurvensteigung, Amplitude, Amplitudendifferenz oder weiteren mathematisch oder geometrisch ermittelbaren Kurvenmerkmalen (z.B. Ableitungen, Flächenberechnungen, Integrale etc). Insbesondere kann es sich dabei um jene Kurvenmerkmale handeln, die die von dem Antriebsriemen in Richtung der Antriebseinheit weitergeleitete intrinsische Energie bestmöglich repräsentieren und somit unmittelbar mit der Zugspannung des Antriebsriemens verbunden sind.

Nach einer weiteren vorteilhaften Ausgestaltung der Erfindung können der algorithmischen Auswertung Randbedingungen für die Kurvenmerkmale der Motorstromkurve zugrunde gelegt sein, die einen oder mehrere Spannungen des Antriebsriemens definieren. Dabei kann es sich um Maximal- oder Minimalwerte einzelner Kurvenmerkmale handeln (beispielsweise eine Maximal- oder Minimalamplitude zu einem vorgegebenen Zeitpunkt), wobei diese Maximal- oder Minimalwerte Grenzwerte festlegen, bis zu welchen ein zuverlässiger Betrieb des Antriebsriemens noch gewährleistet ist.

Nach einer weiteren vorteilhaften Ausgestaltung der vorliegenden Erfindung kann vorgesehen sein, dass die Randbedingungen den Kurvenverlauf bzw. die Kurvenform, Amplitudenwerte, Amplitudendifferenzen oder Kurvensteigungen in einem vorgegebenen Zeitintervall nach Erreichen des Ruhezustands betreffen. Diese Randbedingungen können beispielsweise in dem Einsatz eines Antriebsriemens vorangehenden Testverfahren (auch bereits im Rahmen der Produktentwicklung) festgelegt oder ermittelt werden.

Nach einer weiteren vorteilhaften Ausgestaltung der Erfindung, kann das erfindungsgemäße Verfahren während des aktiven Betriebs des Antriebsriemens ausgeführt werden. Damit wird eine kontinuierliche Zustandsüberwachung der Spannung des Antriebsriemens ermöglicht.

Wie schon eingangs erwähnt, wird die erfindungsgemäße Aufgabenstellung auch mit einem Türsystem gemäß dem Patentanspruch 9 gelöst. Bei dem genannten Türsystem kann es sich insbesondere um ein Schiebetürsystem- oder ein Schwenkschiebetürsystem handeln (auch ein reines Schwenktürsystem kommt in Betracht). Das Türsystem umfasst einen Türflügel, eine Antriebseinheit, einen zwischen der Antriebseinheit und dem Türflügel vorgesehenen Antriebsriemen, und eine Rechen- und Steuereinheit, wobei der Antriebsriemen dazu eingerichtet ist, ein von der Antriebseinheit erzeugtes Drehmoment auf den Türflügel zu übertragen. Das Türsystem ist dazu eingerichtet, das Verfahren nach einem der Ansprüche 1 bis 8 auszuführen. Dabei ist Türflügel als Last im Sinne der vorliegenden Erfindung anzusehen, entsprechend sind alle diesbezüglich im Rahmen der Beschreibung des der Erfindung zugrunde liegenden Verfahrens genannten Ausgestaltungsvarianten auch in den Umfang des erfindungsgemäßen Türsystems einbezogen. Gleichsam kann die Erfindung auch mit einem Trittsystem gelöst werden, umfassend einen Schiebetritt oder einen Klapptritt, eine Antriebseinheit, einen zwischen der Antriebseinheit und dem Schiebe- oder Klapptritt vorgesehenen Antriebsriemen, und eine Rechen- und Steuereinheit, wobei der Antriebsriemen dazu eingerichtet ist, ein von der Antriebseinheit erzeugtes Drehmoment auf den Schiebe- oder Klapptritt zu übertragen. Ferner ist das Trittsystem dazu eingerichtet das Verfahren nach einem der Ansprüche 1 bis 10 auszuführen.

Weitere Vorteile, Ausgestaltungen und Weiterbildungen, die im Zusammenhang mit dem erfindungsgemäßen Verfahren bzw. dem erfindungsgemäßen Türsystem stehen, sind anhand der nachfolgend beschriebenen Ausführungsbeispiele genauer erläutert. Diese sollen dem Fachmann die Erfindung verdeutlichen und ihn in die Lage versetzen, die Erfindung auszuführen, ohne jedoch die Erfindung zu beschränken. Im Zusammenhang der Beschreibung der genannten Ausführungsbeispiele sei auf die folgenden Figuren Bezug genommen, anhand welcher das erfindungsgemäße Verfahren bzw. das erfindungsgemäße System genauer erläutert wird. So zeigt:
- Fig. 1: eine schematische Darstellung der wesentlichen Komponenten des erfindungsgemäßen Türsystems;
- Fig. 2: eine schematische Darstellung des erfindungsgemäßen Verfahrensablaufs;
- Fig. 3: im Betrieb einer Schwenkschiebetür aufgenommene Motorstromkurven kurz vor, während und nach dem Erreichen einer Ruhestellung eines zugehörigen Türflügels bei unterschiedlichen Zugspannungen de Antriebsriemens;
- Fig. 4: im Betrieb einer Schwenkschiebetür aufgenommene Motorspannungskurven kurz vor, während und nach dem Erreichen einer Ruhestellung eines zugehörigen Türflügels bei unterschiedlichen Zugspannungen de Antriebsriemens.

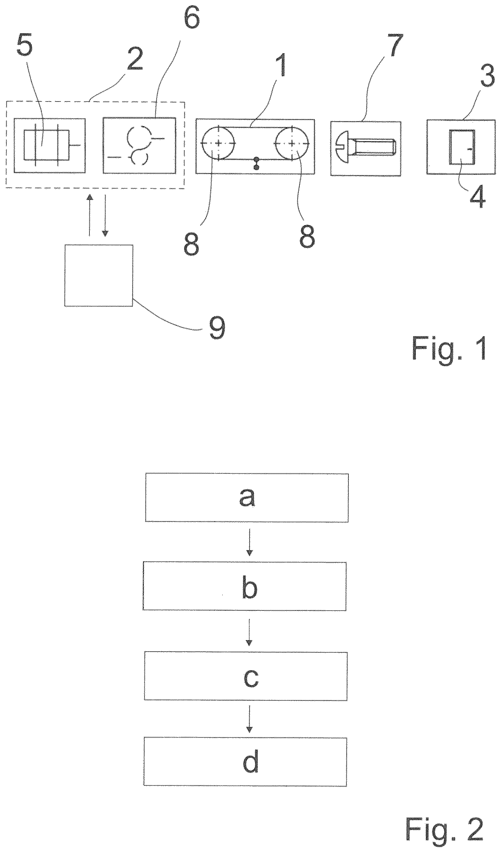

Die Figur 1 zeigt in einer schematischen Darstellung die an dem erfindungsgemäßen Verfahren beteiligten Komponenten. Bei den dargestellten Komponenten kann es sich ohne Weiteres auch um Bestandteile des mit der Erfindung beanspruchten Türsystems handeln. Ferner sind die in Fig. 1 wiedergegebenen Systemkomponenten auch allgemein auf jegliche Art von elektromechanischen Systemen übertragbar.

Wie bereits beschrieben, handelt es sich bei dem mit der vorliegenden Erfindung beanspruchten Verfahren um ein Verfahren zur Bestimmung der Spannung eines Antriebsriemens 1. Der Antriebsriemen 1 ist dabei zwischen einer Antriebseinheit 2 und einer Last 3 angeordnet, und dient der Übertragung von seitens der Antriebseinheit 2 erzeugten Drehmomenten auf die Last 3. Aus der Drehmomentübertragung kann beispielsweise eine Bewegung der Last 3 resultieren. Gleichsam kann durch Auswahl des Drehmoments aber auch eine Bewegung der Last 3 abgebremst werden, beispielsweise durch Verringern des wirkenden Drehmoments oder Umkehren des Vorzeichens.

Der Antriebsriemen 1 läuft (im hier gezeigten Beispiel) über zwei Umlenkrollen bzw. Riemenscheiben 8. Eine der Umlenkrollen 8 ist mit einem von der Antriebseinheit 2 ausgehenden Getriebeelement 6 wirkverbunden. Bei dem Getriebeelement 6 kann es sich beispielsweise um eine mechanische Welle handeln. Das Getriebeelement 6 wiederrum wird von einem Motor 5 angetrieben, und z. B. in eine Rotationsbewegung versetzt. Die Rotationsbewegung wird auf eine antriebsseitige Umlenkrolle 8 übertragen, wodurch letztlich der Antriebsriemen 1 und eine mit dem Antriebsriemen 1 über ein mechanisches Übertragungsglied 7 in Wirkverbindung stehende Last 3 in Bewegung versetzt wird. Bei der Last kann es sich beispielsweise um einen Türflügel 4 eines Türsystems handeln.

Im Rahmen der hier beschriebenen Erfindung ist der Motor 5 und das Getriebeelement 6 als gemeinsame Antriebseinheit 2 aufzufassen. Die Antriebseinheit 2 ist signaltechnisch mit einer Rechen- und Steuereinheit 9 verbunden (kabellos oder kabelgebunden). Über diese kann einerseits der gesamte Bewegungsablauf des zugrunde liegenden elektromechanischen Systems (z. B. des Türsystems) gesteuert und geregelt werden, andererseits kann das erfindungsgemäße Verfahren (bzw. wesentliche Schritte des Verfahrens) unter Einsatz der Rechen- und Steuereinheit 9 ausgeführt werden.

In der Figur 2 sind die Verfahrensschritte des der Erfindung zugrunde liegenden Verfahrens in einer stark schematisierten Darstellung wiedergegen.

In einem ersten Verfahrensschritt a. wird die Last 3 (beispielsweise ein Türflügel 4 eines Türsystems) von einem bewegten Zustand in einen Ruhezustand gebracht. Bezogen auf einen Türflügel 4 eines Türsystems kann unter einem solchen bewegten Zustand jener Zustand zu verstehen sein, welchem der Türflügel 4 während einer Öffnungs- oder Schließbewegung unterliegt. Unter einem Ruhezustand ist im Sinne des Verfahrensschritts a. ein jeder Zustand zu verstehen, bei welchem die Last 3 keiner Bewegung unterliegt, bezogen auf ein Türsystem ist unter einem Ruhezustand beispielsweise das Ruhen des Türflügels 4 in seiner geöffneten oder geschlossenen Stellung zu verstehen. Die Bewegung der Last 3 von dem bewegten in den Ruhezustand wird über das mit der Last 3 verbundene Übertragungsglied 7, den damit verbundenen Antriebsriemen 1 und letztlich die Antriebseinheit 2 vermittelt, beispielsweise durch Reduzierung des wirkenden Drehmoments oder durch Umkehrung dessen Vorzeichens.

In einem Verfahrensschritt b. wird die Motorspannung während der Ausführung des Verfahrensschritts a. (also während der Bewegung der Last 3 von einem bewegten in einen Ruhezustand) erfasst. Die Erfassung kann über eine geeignete Spannungsmesseinheit erfolgen, auf welche im Rahmen dieser Erfindung nicht genauer Bezug genommen wird. Grundsätzlich kommt dazu jedes zur zeitaufgelösten Erfassung der Motorspannung geeignete Erfassungsmittel in Betracht. Die erfassten Daten werden vorzugsweise in Form einer zeitaufgelösten Motorspannungskurve bereitgestellt, können aber auch in anderen Datenwiedergabeformen (Wertetabellen etc.) oder Datenformaten bereitgestellt werden.

In einem auf den Verfahrensschritt b. folgenden Verfahrensschritt c. wird der Motorstrom aus der erfassten Motorspannung bzw. der Motorspannungskurve ermittelt. Im Anschluss wird eine zeitaufgelöste Motorstromkurve bereitgestellt, die in ihrer zeitlichen Dimension der Motorspannungskurve entspricht. Auch die der Motorstromkurve zugrunde liegenden Daten können in anderen Datenwiedergabeformen (Wertetabellen etc.) oder Datenformaten bereitgestellt werden.

In einem Verfahrensschritt d. wird die zeitaufgelöste Motorstromkurve ausgewertet. Dabei wird die Spannung des Antriebsriemens 1 anhand von ausgewählten Kurvenmerkmalen der Motorstromkurve ermittelt. Die Auswertung kann beispielsweise über eine Rechen- und Steuereinheit 9 vorgenommen werden, jedoch ohne Weiteres auch über eine externe Recheneinheit. Im letzteren Fall muss jedoch gewährleistet sein, dass die für die Auswertung benötigten Daten (insbesondere die Motorstromkurve) an die externe Recheneinheit übermittelt werden.

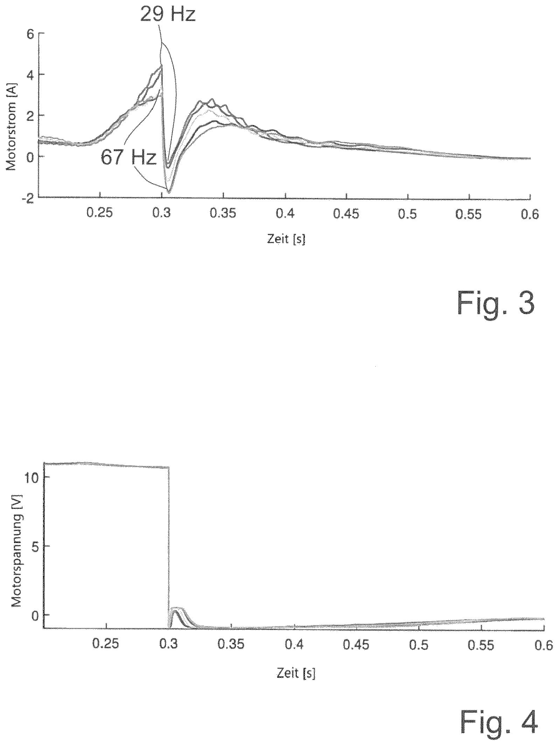

Die Eignung des vorliegenden Erfindungsansatzes (Ermitteln der Zugspannung des Antriebsriemens 1 anhand von Motorstromkurven) wurde experimentell untersucht und validiert, im Speziellen anhand einer BIDS Alstom X60B Türe. In der Figur 3 sind die zugehörigen, experimentell ermittelten Motorstromkurven wiedergegeben, während in der Figur 4 die dazu korrespondierenden Motorspannungskurven dargestellt sind.

Bei den experimentellen Untersuchungen wurden verschiedene Spannungen des Antriebsriemens untersucht und validiert. Für Referenzzwecke wurden die vorliegenden bzw. eingestellten Spannungen mit einem Transducer in einer zur Zugspannung proportionalen Frequenzdomäne gemessen. Dazu wurde der Antriebsriemen in eine Schwingung versetzt und die Schwingungsfrequenz mit dem Transducer gemessen. Unterschiedliche Schwingungsfrequenzen repräsentieren dabei unterschiedliche Zugspannungen des Antriebsriemens. Je höher die Frequenz, desto höher die Zugspannung. Parallel wurden bei den unterschiedlichen Schwingungsfrequenzen Motorspannungskurven und Motorstromkurven aufgezeichnet bzw. ermittelt (gemäß den vorangehend beschriebenen Verfahrensschritten a. bis d.).

Eine Normalspannung für den Antriebsriemen des genannten Türsystems liefert eine Schwingungsfrequenz zwischen 46 und 50 Hz. Vorliegend wurden Frequenzen zwischen 29 Hz und 67 Hz untersucht. Die vorliegende Zugspannung des Antriebsriemens 1 wirkt sich auf die Kurvenform sowohl der Motorstromkurve als auch der Motorspannungskurve aus. Bezogen auf unterschiedliche Zugspannungen lassen sich besonders charakteristische Kurvenformen zu jenen Zeitpunkten feststellen, bei denen der Türflügel 4 beschleunigt oder abgebremst wird, denn zu diesen Zeitpunkten dehnt sich der Antriebsriemen 1 aus bzw. zieht sich zusammen. Wie bereits erwähnt, kommt es an den Endpositionen der Last 3 (des Türflügels 4) zu abrupten Änderungen der Motorspannung (vgl. Figur 4).

Für die experimentelle Validierung wurde der Öffnungs- und Schließvorgang der genannten Tür fünfmal hintereinander für jede Frequenz durchgeführt. Die in den Figuren 3 und 4 wiedergegebenen Kurven geben demnach die für eine jede Frequenz gemittelten Kurven wieder.

Die Figuren 3 und 4 repräsentieren die Motorstromkurve und die Motorspannungskurve kurz vor, während und nach Erreichen des Ruhezustands der Last 3, insbesondere nehmen die Kurven auf die geöffnete Endlage eines der BIDS Alstom X60B Türe zugehörigen Türflügels Bezug. Wie in der Figur 4 wiedergegeben, ändert sich die Motorspannung abrupt von 11 V auf O V bei Erreichen der Endlage zu einem Zeitpunkt von 0.3 s. Die remanent im Türsystem vorliegende Energie induziert ab diesem Zeitpunkt eine überwiegend negative transiente Spannung, die nach ca. 300 ms wieder ansteigt.

Bei Erreichen der geöffneten Endposition steigt der Motorstrom an (siehe Figur 3, Anstieg des Motorstroms ab einem Zeitpunkt von circa 0.25 s). Kurz nach der Unterbrechung des der Antriebseinheit zugeordneten elektrischen Stromkreises nimmt der Motorstrom negative Werte an (siehe z. B. den Bereich bei 0.3 s; auch als Undershoot bezeichnet), was dem regenerativen Betrieb entspricht. Nach ca. 20 ms steigt der Strom wieder in den positiven Bereich, erfährt ein lokales Maximum (Overshoot) und sinkt nachfolgend auf einen Motorstrom von Null ab. Die vorliegenden experimentellen Messungen illustrieren, dass die Amplitude des Undershoots und Overshoots von der Elastizität bzw. der Verformung des Antriebsriemens sowie von seiner Dämpfungscharakteristik abhängt. Aus Übersichtsgründen wurde in der in Figur 3 gezeigten Motorstromkurve nur den die maximalen Schwingungswerte repräsentierenden Motorstromkurven eine konkrete Schwingungsfrequenz zugeordnet (29 Hz und 67 Hz). Die jeweils zugehörigen Maximalwerte im Overshoot und Undershoot Bereich sind in der Figur 3 gekennzeichnet.

Dabei lässt sich feststellen, dass ein Antriebsriemen 1 mit geringerer Spannung (z. B. 29 Hz) im Undershootbereich einen weniger stark negativen Wert einnimmt (also einen niedrigeren Regenerativstrom aufweist) als ein Antriebsriemen 1 mit höherer Spannung (z. B. 67 Hz mit stärker negativen Motorstromwerten), da er vergleichbar wie ein Filter mit einer großen Zeitkonstante wirkt, der die Änderung der Bewegung glättet, aber gleichzeitig ein größeres Stromprodukt bezogen auf die vom Antriebsriemen 1 gespeicherte Energie aufweist, bis die remanente Energie vollständig abgebaut ist. Im Falle einer größeren Riemenspannung, ist der Antriebsriemen 1 steifer und speichert nur einen geringen Anteil der Energie in Form von elastischer Energie. Dadurch wird die Dämpfung im generatorischen Betrieb geringer und es treten höhere negative Ströme auf. Dazu korrespondierend ist der positive Peak (im Overshoot Bereich) niedriger, da auch die remanente Energie geringer ist.

In beiden Fällen (niedrigere und höhere Zugspannung), verschwindet die remanente Energie nach ca. 300 ms. Die Peak-zu-Peak Differenz (bezogen auf den Overshoot- und den Undershoot-Bereich) ist jedoch für beide Schwingungsfrequenzen (also Spannungszustände) sehr ähnlich. Die Form der Motorstromkurve ändert sich entsprechend der aus unterschiedlichen Zugspannungen resultierenden Systemelastizität und der vorliegenden Dämpfungscharakteristik. Zu beachten ist ferner, dass die Overshoot-Amplitude umgekehrt proportional zur Zugspannung des Antriebsriemens 1 ist.

Wie vorangehend dargestellt, lassen sich anhand von ausgewählten Kurvenmerkmalen einer Motorstromkurve (beispielsweise der Amplitude im Overshoot- oder Undershoot-Bereich bzw. einer dazu korrespondierenden Amplitudendifferenz) Aussagen zu der einem Antriebsriemen zugrunde liegenden Zugspannung treffen. Diese Informationen können unter Einsatz eines geeigneten Auswertealgorithmus (beispielsweise basierend auf künstlicher Intelligenz) zur Bestimmung der Spannung eines Antriebsriemens herangezogen werden. Insbesondere kann mit dem erfindungsgemäßen Verfahren eine Spannungszustandskontrolle während des aktiven Betriebs eines Antriebsriemens in einem laufenden elektromechanischen System (z.B. einem Türsystem) durchgeführt werden.

### Bezugszeichenliste

- 1: Antriebsriemen
- 2: Antriebseinheit
- 3: Last
- 4: Türflügel
- 5: Motor
- 6: Getriebeelement
- 7: mechanisches Übertragungsglied
- 8: Umlenkrolle, Riemenscheiben
- 9: Rechen- und Steuereinheit

## Patentansprüche

1. Verfahren zur Bestimmung der Spannung eines Antriebsriemens (1), wobei der Antriebsriemen (1) zur Übertragung eines von einer Antriebseinheit (2) erzeugten Drehmoments auf eine Last (3) vorgesehen ist, wobei es sich bei der Last (3) um einen Türflügel (4) eines ein- oder zweiflügligen Schiebetür- oder Schwenkschiebetürsystems handelt, umfassend die folgenden Schritte:
a. Bewegen des Türflügels (4) von einem bewegten Zustand in einen Ruhezustand;
b. Erfassen der Motorspannung während der Ausführung des Verfahrensschritts a. und Bereitstellen einer zeitaufgelösten Motorspannungskurve;
c. Ermitteln des Motorstroms aus der erfassten Motorspannung bzw. der Motorspannungskurve und Bereitstellen einer zeitaufgelösten Motorstromkurve;
d. Auswerten der zeitaufgelösten Motorstromkurve und Ermitteln der Spannung des Antriebsriemens (1) anhand von ausgewählten Kurvenmerkmalen der Motorstromkurve;
wobei die Auswertung im Rahmen des Verfahrensschritts d. im Wege einer algorithmischen Auswertung erfolgt, welcher ausgewählte Kurvenmerkmale der Motorstromkurve zugrunde gelegt sind, welche die Motorstromkurve nach dem Erreichen des Türflügels (4) im Ruhezustand kennzeichnen.

2. Verfahren nach Anspruch 1, **dadurch gekennzeichnet, dass** der bewegte Zustand eine Öffnungs- oder Schließbewegung des Türflügels (4) betrifft.

3. Verfahren nach Anspruch 1, **dadurch gekennzeichnet, dass** der Ruhezustand einen geöffneten Zustand des Türflügels (4) betrifft.

4. Verfahren nach Anspruch 1, **dadurch gekennzeichnet, dass** der Auswertung jene Kurvenmerkmale der Motorstromkurve zugrunde gelegt werden, welche die Motorstromkurve in einem Zustand kennzeichnen, bei dem der Stromkreis des Motors (5) unterbrochen ist.

5. Verfahren nach Anspruch 1 oder 4, **dadurch gekennzeichnet, dass** die Kurvenmerkmale der Motorstromkurve ausgewählt sind aus der Kurvensteigung, Amplitude, Amplitudendifferenz oder weiteren mathematisch oder geometrisch ermittelbaren Kurvenmerkmalen.

6. Verfahren nach Anspruch 1, **dadurch gekennzeichnet, dass** der algorithmischen Auswertung Randbedingungen für die Kurvenmerkmale der Motorstromkurve zugrunde gelegt sind, die einen oder mehrere Spannungszustände des Antriebsriemens (1) definieren.

7. Verfahren nach Anspruch 6, **dadurch gekennzeichnet, dass** die Randbedingungen den Kurvenverlauf bzw. die Kurvenform, Amplitudenwerte, Amplitudendifferenzen oder Kurvensteigungen in einem vorgegebenen Zeitintervall nach Erreichen des Ruhezustands betreffen.

8. Verfahren nach einem der vorangehenden Ansprüche, **dadurch gekennzeichnet, dass** das Verfahren während des aktiven Betriebs des Antriebsriemens (1) ausgeführt wird und eine kontinuierliche Zustandsüberwachung der Spannung des Antriebsriemens (1) ermöglicht.

9. Türsystem, nämlich ein Schiebetür- oder Schwenkschiebetürsystem, umfassend einen Türflügel (4), eine Antriebseinheit (2), einen zwischen der Antriebseinheit (2) und dem Türflügel (4) vorgesehenen Antriebsriemen (1), und eine Rechen- und Steuereinheit (9), wobei der Antriebsriemen (1) dazu eingerichtet ist, ein von der Antriebseinheit (1) erzeugtes Drehmoment auf den Türflügel (4) zu übertragen, **dadurch gekennzeichnet, dass** das Türsystem dazu eingerichtet ist, das Verfahren nach einem der Ansprüche 1 bis 8 auszuführen.

## Claims

1. A method for determining the tension of a drive belt (1), wherein the drive belt (1) is provided for transmission of a torque generated by a drive (2) to a load (3), wherein the load (3) concerns a door leaf (4) of a single-leaf or double-leaf sliding door or pivotable sliding door system, comprising the following steps:
a. moving the door leaf (4) from a moving state into a rest state;
b. recording the motor voltage during the execution of process step a. and providing a time-resolved motor voltage curve;
c. determining the motor current from the recorded motor voltage or the motor voltage curve and providing a time-resolved motor current curve;
d. evaluating the time-resolved motor current curve and determining the tension of the drive belt (1) by means of selected curve features of the motor current curve,
wherein the evaluation is made within the framework of process step d. by an algorithmic evaluation, which is based on selected curve features of the motor current curve, which characterize the motor current curve after reaching of the door leaf (4) in the rest state.

2. The method according to Claim 1, **characterized in that** the moving state relates to an opening or closing movement of the door leaf (4).

3. The method according to Claim 1, **characterized in that** the rest state relates to an open state of the door leaf (4).

4. The method according to Claim 1, **characterized in that** the evaluation is based on the curve features of the motor current curve which characterize the motor current curve in a state in which the circuit of the motor (5) is interrupted.

5. The method according to Claim 1 or 4, **characterized in that** the curve features of the motor current curve are selected from the curve slope, amplitude, amplitude difference, or further curve features able to be determined mathematically or geometrically.

6. The method according to Claim 1, **characterized in that** the algorithmic evaluation is based on boundary conditions for the curve features of the motor current curve which define one or more tension states of the drive belt (1).

7. The method according to Claim 6, **characterized in that** the boundary conditions relate to the curve behaviour or the curve shape, amplitude values, amplitude differences, or curve slopes in a predefined time interval after reaching the rest state.

8. The method according to one of the preceding claims, **characterized in that** the method is executed during the active operation of the drive belt (1) and enables a continuous status monitoring of the tension of the drive belt (1).

9. A door system, namely a sliding door- or pivotable sliding door system, comprising a door leaf (4), a drive unit (2), a drive belt (1) provided between the drive unit (2) and the door leaf (4), and a processing and control unit (9), wherein the drive belt (1) is configured to transmit a torque generated by the drive unit (1) to the door leaf (4), **characterized in that** the door system is configured to execute the method according to one of Claims 1 to 8.

## Revendications

1. Procédé de détermination de la tension d'une courroie d'entraînement (1), sachant que la courroie d'entraînement (1) est prévue pour la transmission d'un couple produit par une unité d'entraînement (2) à une charge (3), sachant qu'il s'agit concernant la charge (3) d'un battant de porte (4) d'un système de porte coulissante ou coulissante pivotante à un ou deux battants, comprenant les étapes suivantes :
a. déplacement du battant de porte (4) d'un état déplacé à un état de repos,
b. saisie de la tension du moteur pendant l'exécution de l'étape de procédé a. et élaboration d'une courbe de tension de moteur résolue dans le temps,
c. détermination du courant du moteur à partir de la tension de moteur saisie ou de la courbe de tension de moteur et élaboration d'une courbe de courant de moteur résolue dans le temps,
d. évaluation de la courbe de courant du moteur résolue dans le temps et détermination de la tension de la courroie d'entraînement (1) à l'aide des caractéristiques de courbe sélectionnées de la courbe de courant du moteur,
sachant que l'évaluation a lieu dans le cadre de l'étape de procédé d. au cours d'une évaluation algorithmique, des caractéristiques de courbes sélectionnées de la courbe de courant du moteur étant prises pour base de celle-ci, lesquelles caractérisent la courbe de courant du moteur après que le battant de porte (4) ait atteint l'état de repos.

2. Procédé selon la revendication 1, **caractérisé en ce que** l'état déplacé concerne un mouvement d'ouverture ou de fermeture du battant de porte (4).

3. Procédé selon la revendication 1, **caractérisé en ce que** l'état de repos concerne un état ouvert du battant de porte (4).

4. Procédé selon la revendication 1, **caractérisé en ce que** l'on prend pour base de l'évaluation les caractéristiques de courbe de la courbe de courant du moteur, qui caractérisent la courbe de courant du moteur dans un état pour lequel le circuit de courant du moteur (5) est interrompu.

5. Procédé selon la revendication 1 ou 4, **caractérisé en ce que** les caractéristiques de courbe de la courbe de courant du moteur sont choisies à partir de la croissance de courbe, de l'amplitude, de la différence d'amplitude ou d'autres caractéristiques de courbe peuvent être déterminées de façon mathématique ou géométrique.

6. Procédé selon la revendication 1, **caractérisé en ce que** des conditions marginales pour les caractéristiques de courbe de la courbe de courant du moteur sont prises pour base de l'évaluation algorithmique, qui définissent un ou plusieurs états de tension de la courroie d'entraînement (1).

7. Procédé selon la revendication 6, **caractérisé en ce que** les conditions marginales concernent l'allure de courbe ou la forme de courbe, les valeurs d'amplitude, les différences d'amplitude ou les croissances de courbe dans un intervalle de temps prédéfini après avoir atteint l'état de repos.

8. Procédé selon l'une quelconque des revendications précédentes, **caractérisé en ce que** le procédé est exécuté pendant le fonctionnement actif de la courroie d'entraînement (1) et permet un contrôle d'état continu de la tension de la courroie d'entraînement (1).

9. Système de porte, notamment un système de porte coulissante ou coulissante pivotante, comprenant un battant de porte (4), une unité d'entraînement (2) une courroie d'entraînement (1) prévue entre l'unité d'entraînement (2) et le battant de porte (4) et une unité de calcul et de commande (9), sachant que la courroie d'entraînement (1) est agencée pour transmettre un couple produit par l'unité d'entraînement (1) au battant de porte (4), **caractérisé en ce que** le système de porte est agencé pour exécuter le procédé selon l'une quelconque des revendications 1 à 8.
